# EUROPEAN PATENT APPLICATION

(11) **EP 3 122 058 A1**
(43) Date of publication of application: **25.01.2017**
(21) Application number: 16166899.1
(22) Date of filing: 25.04.2016
(51) Int. Cl.: H04N 21/442, G06F 17/30, H04N 21/278, H04N 21/472, H04N 21/482

(54) **METHOD AND DEVICE FOR INFORMATION PUSH**

(30) Priority: 24.07.2015 CN 201510441244
(71) Applicant: Xiaomi Inc., Beijing 100085 (CN)
(72) Inventor: LIU, Jie, 100085 BEIJING (CN); LIU, Weixing, 100085 BEIJING (CN); WU, Xiaoyong, 100085 BEIJING (CN)
(74) Representative: Cougard, Jean-Marie

(57) **Abstract**

This disclosure is related to a method and a device for information push, a computer program and a recording medium, which belongs to the computer field. The method comprises: recording (101) user's operation on video information; determining (102) whether the user is acquiring the updating information of the video on the basis of the operation; tracking (103) the video when determining that the user is acquiring the updating information of the video; and pushing (104) the updating information to the user when the video is updated. According to the above solution, on one hand, the video watching behaviors of a user can be intelligently recognized so as to provide video update news to the user in time, while on the other hand, information is pushed according to the operation behaviors of the user so as to accurately reflect the watching preferences of the user.

## Description

### TECHNICAL FIELD

The disclosure is related to the computer field, particularly to a method and a device for information push, and a corresponding computer program and recording medium.

### BACKGROUND

At present, many TV-dramas are seasonal series. For the updating reminder of the episodes, it regularly provides the updating information of one episode in one season. But for the long interval between two seasons, there is lack of specific information, and the user will wait for a long time.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of embodiments of the present disclosure, there is provided a method for providing video update information from a server to a terminal device. The method includes:
recording, by the server, user's operations on the terminal device related to a video;
determining whether the user is acquiring updating information of the video on the basis of the user's operations;
tracking the video when determining that the user is acquiring the updating information of the video; and
pushing the updating information of the video to the terminal device when the video is updated.

In a particular embodiment, the user's operations comprises user's search for the video information or user's viewing record of the video information.

In a particular embodiment, said determining of whether the user is acquiring the updating information of the video on the basis of the operation when the operation is the user's search operation for the video information, comprises:
determining whether the video information searched by the user exists in a video database;
recording the number of user's searching for the video, and determining whether the number of recorded user's searching for the video is more than a first preset threshold ;
when the number of recorded user's searching for the video is more than the first preset threshold, determining that the user wants the updating information of the video.

In a particular embodiment, said determining of whether the user is acquiring the updating information of the video on the basis of the operation when the operation is the user's viewing record for the video information, comprises:
determining whether the number of recorded user's viewing the video is more than a second preset threshold;
when the number of recorded user's viewing the video is more than the second preset threshold, determining that the user wants the updating information for the video.

In a particular embodiment, said pushing of the updating information to the user when the video is updated comprises any one of:
adding a reminder to a notification bar on the terminal to remind the user of the updated video;
providing a pop-up window on a page of a video application noticing the updated video when the user starts the video application; and
pushing a message to an account of the user when the video is updated .
According to a second aspect of embodiments of the present disclosure, there is provided a device for providing video update information, the device includes:
a message recording module configured to record the user's operation on video information;
a message recording module configured to record user's operations on the terminal device related to a video;
an information judging module configured to determine whether the user is acquiring updating information of the video on the basis of the user's operations ;
an information tracking module configured to track the video when determining that the user acquires the updating information of the video; and
a message reminder module configured to push the updating information of the video to the terminal device when the video is updated.

In a particular embodiment, the information judging module comprises:
a first judging sub-module configured to determine whether the video information searched by the user exists in a video database;
an information counting sub-module configured to record the number of user's searching for the video, and determine whether the number of recorded user's searching for the video is more than a first preset threshold; and
a second judging sub-module configured to determine that the user wants the updating information of the video, when the number of recorded user's searching for the video is more than the first preset threshold.

In a particular embodiment, the information judging module comprises:
a third judging sub-module configured to determine whether the number of recorded user's viewing the video is more than a second preset threshold; and
a fourth judging sub-module configured to determine that the user wants the updating information for the video, when the number of recorded user's viewing the video is more than the second preset threshold.

In a particular embodiment, the information reminder module comprises:
a first reminder sub-module configured to add a reminder to a notification bar on the terminal to remind the user of the updated video;
a second reminder sub-module configured to provide a pop-up window on a page of a video application noticing the updated video when the user starts the video application; and
a third reminder sub-module configured to push a message to an account of the user when the video is updated.

According to a third aspect of embodiments of the present disclosure, there is provided a device for information push, comprising:
a processor;
a memory for storing executable instructions of the processor;
wherein the processor is configured to:
   Record, by the server, user's operations on the terminal device related to a video;
   determine whether the user is acquiring updating information of the video on the basis of the user's operations;
   track the video when determining that the user is acquiring the updating information of the video; and
   push the updating information of the video to the terminal device when the video is updated.

In a particular embodiment, the steps of the method for providing video update information are determined by computer program instructions.

Consequently, according to a fourth aspect, the invention is also directed to a computer program for executing the steps of a method for providing video update information as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of the present disclosure may comprise the following advantageous effects:
The technical solution is implemented by the following steps: recording user's operation on video information; determining whether the user is acquiring the updating information of the video on the basis of the operation; tracking the video when determining that the user is acquiring the updating information of the video; and pushing the updating information to the user when the video is updated. According to the above solution, on one hand, the video watching behaviors of a user can be intelligently recognized so as to provide video update news to the user in time, while on the other hand, information is pushed according to the operation behaviors of the user so as to accurately reflect the watching preferences of the user.

It is to be understood that both the foregoing general description and the following detailed description are only exemplary and explanatory and not limiting the invention.

### BRIEF DESCRIPTION OF THE DRAWINGS

The accompanying drawings are incorporated in and constitute a part of this specification, illustrate embodiments consistent with the invention and, together with the description, serve to explain the principles of the invention.
Fig. 1 is a flow chart showing a method for information push, according to an exemplary embodiment;
Fig. 2 is a flow chart showing a method for information push, according to another exemplary embodiment;
Fig. 3 is a flow chart showing a device for information push, according to an exemplary embodiment;
Fig. 3A is a block diagram showing an information judging module according to an embodiment shown in Fig. 3;
Fig. 3B is a block diagram showing an information judging module according to an embodiment shown in Fig. 3;
Fig. 3C is a block diagram showing a message reminder module according to an embodiment shown in Fig. 3; and
Fig. 4 is a block diagram showing a device for information push, according to an exemplary embodiment.

With the above figures, the embodiments that have been shown and determined by the present disclosure will be described in details in the following. These figures and description do not limit the scope of the disclosure by any way but describe the concept of the present disclosure for the person skilled in the art with reference to certain embodiments.

### DETAILED DESCRIPTION

Reference will now be made in detail to exemplary embodiments, and examples are illustrated in the accompanying drawings. The following description refers to the accompanying drawings where the same numbers in different drawings represent the same or similar elements unless otherwise represented. The implementations set forth in the following description of exemplary embodiments do not represent all implementations of the invention. Instead, they are merely examples of apparatuses and methods of a few aspects related to the invention as recited in the appended claims.

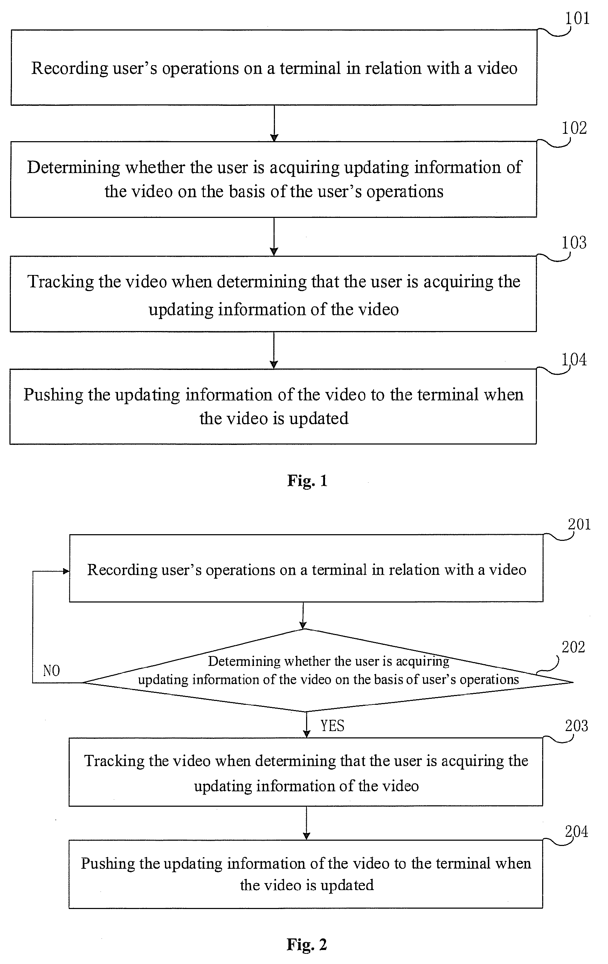

Fig. 1 is a flow chart showing a method for providing (or pushing) information, according to an exemplary embodiment, implemented by a terminal such as a video server, a smart TV, a tablet PC, a smart phone, a computer or any other appropriate terminal. In this particular example, the method is implemented by a video server and may include the following steps:
In step 101, user's operations on the terminal device related to a video are recorded by a video server. In a particular embodiment, only one user's operation is recorded.
   The user's operation may be, for example, a searching operation for the video, or a playing operation of the video. Specifically, when a user accesses a webpage providing a video streaming service and searches for a certain video, a video server corresponding to the webpage may record the searching operation in association with the certain video.
In step 102, it is determined, by a video server, whether the user is acquiring updating information of the video on the basis of the pattern of the recorded user's operation, i.e. on the basis of the user's operations.
   For example, when a record shows repetitive searching operations by the user for the video, the video server determines that the user is requesting update information on the video. In other example, when a record shows repetitive playing operations by the user in association with the video, the video server determines that the user is requesting update information on the video. Update information on the video may include information on availability of the video or information on availability of next episode video.
In step 103, the video is tracked by the video serverwhen determining that the user is acquiring the updating information of the video. the video.
In step 104, the video server pushes the update information on the video to the user when the video is updated (e.g., in a video database). For example, when the video is newly added to a video database, the video server sends a message to a user terminal that the video is now available at a certain video website.
   In a summary, the embodiments of the present disclosure provide a method for pushing information. The technical solution is implemented by the following steps: recording user's operations on the terminal device related to a video; determining whether the user is acquiring update information on the video on the basis of the pattern of user's operation; monitoring a video database to find any update regarding the video when determining that the user is acquiring the update information on the video; and pushing the update information on the video to the user when the video is updated, for instance in the video database. According to the above solution, on one hand, the video watching pattern of a user can be intelligently recognized so as to provide video update news to the user in time, while on the other hand, information is pushed according to the operation pattern of the user so as to accurately reflect the watching preferences of the user.

Fig. 2 is a flow chart showing a method for information push, according to another exemplary embodiment. The method is implemented by a terminal such as a smart TV, a tablet PC, a smart phone, a computer or another terminal. In this particular example, the method is implemented in a video server and may include the following steps:
In step 201, the user's operations on the terminal device related to a video is recorded by the video server. In a particular example, a single user's operation is recorded in step 201.
   In one embodiment, the user's operations comprises the user's search for the video information or the user's viewing record of the video information.
In step 202, it is determined, by the video server, whether the user is acquiring the update information on the video on the basis of the user's operations ;
   when determining that the user is acquiring the update information on the video, the method proceeds to step 203.
   when determining that the user is not acquiring the update information on the video, the method proceeds to step 201.

In one embodiment, determining whether the user is acquiring the update information on the video on the basis of the user's operation when said operation is the user's search for the video information, comprises:
determining whether the video searched by the user exists in a video database.
when the video searched by the user does not exist, counting the number of searching times for the video by the user by looking up the recorded operations by the user, said searching times being representative of how many times the user has searched for the video;
determining that the video update information is acquired by the user when the number of searching times for the video is larger than a first preset threshold.

Here, the first preset threshold may be set in advance, for example, it may be three. When the user searches one video for more than three times, he may be regarded having very high intention to view the video. the embodiment of the disclosure may not be limited to the threshold of three. The threshold may be adjusted on the basis of actual conditions.

In one embodiment, determining whether the user is acquiring the updating information of the video on the basis of the user's operation when said operation is the user's viewing for the video information, comprises:
determining the number of user's viewing the video (i.e. how many times the user has viewed the video) on the basis of the user's viewing record related to the video;
determining that the video update information is acquired by the user when the number of user's viewing the video is larger than a second preset threshold.

Here, the first preset threshold may be set in advance, for example, it may be eight. When the user views more than eight episodes of a TV-drama, he may be regarded to be a tracker of the continuous video. Of course, the embodiment of the disclosure may not be limited the threshold example above. The threshold may be adjusted on the basis of actual conditions.

In step 203, the video is tracked, by the video server, when determining that the user is acquiring the update information on the video.
the video server monitors the video database to find any update regarding the video when determining that the user is requesting the update information on the video.

In a particular embodiment, the video is marked to track any update on the video when determining that the user is acquiring the update information on the video.

In step 204, the update information on the video is pushed to the user when the video is updated in the video database.

In one embodiment, when the video is updated, the update information on the video may be sent to the user through any one of the following three ways:
First, the video server may add a reminder to a notification bar to remind the user of the updated on the video when the video is updated;
Second, the video server may provide a pop-up window on a video application to remind the user of the updated on the video if the user starts the video application when the video is updated;
Third, the video server may push the video to a contact account set by the user to remind of the update on the video.

In an embodiment of the disclosure, the update information includes a website, the name and the synopsis of the updated video, etc.

In a summary, the embodiments of the present disclosure provide a method for information push. For the implement of the technical solution, record the user' operation related to a video, determine whether the user is acquiring the updating information of the video on the basis of the operation, track the video when determining that the user is acquiring the update information on the video, and when the video information is updated, pushes the updating information to the user. On one hand, it is able to intelligently identify the user's video viewing behavior to provide the video update information to the user in time; on the other hand, it pushes the information on the basis of the user's operation and responds to the preference of the user more accurately.

In combination with specific application scenarios, the above technical solution is described in the following:
In scenarios 1, if user A search video A from a video website on a terminal, but video A has not been added to the video website database yet, the video website would record the searching activity for video A by user A. The searching activity may be recorded with the time of searching. For example, the video website may record that user A searched video A at 10:30pm, January 1, 2016. Searching activities at different time may be counted as different searching activities. In one example, two searching activities with a very short interval, for example several seconds, may be counted as one searching activity.

When a record shows that the number of searching activities for video A by user A is more than two, it determines that user A really wants to watch video A and the video website will mark and track video A. Once video A is added to the video website, the website will send a message to user A that video A is available. In other example, even before video A is added to the video website, the website may send a message to user A indicating the expected date of uploading video A. In another example, the website may send a message to user A that video A is not available yet so that user A does not need to access the video website for the time being.

Thus, user A does not need to pay active attention to the availability of video A at every moment. The video website may intelligently record the video information that user A wants to watch, on the basis of searching by user A, and may push the update information on video A in time.

In scenarios 2, user B watches a seasonal serial drama B from a video website on the terminal. If a season for the seasonal serial drama B is ongoing or the next season is upcoming, the video website may record ser B's viewing activities for the seasonal serial drama B. When the record shows that user B has watched over six episodes of the seasonal serial drama B or has watched the whole season, the video website determines that user B is a drama tracker, and the video website may mark and track the seasonal serial drama B. Once a new season or the next new episode of the current season of the seasonal serial drama B is added to the video website, the website may immediately send the update information of the seasonal serial drama B to user B. For example, the website may send a message that a new season or a next episode of a current season for drama B is available. Thus, user B does not have to remember the update time of the seasonal serial drama. The video website intelligently may analyze the intention of the user on the basis of record of the user B's viewing activities and may accurately recommend the update information of the video that the user wants to watch in time.

The followings are the embodiments of the device of the disclosure and may implement the embodiment of the method of the disclosure. For the details not disclosed by the embodiments of the device of the disclosure, please refer to the embodiments of the method of the disclosure.

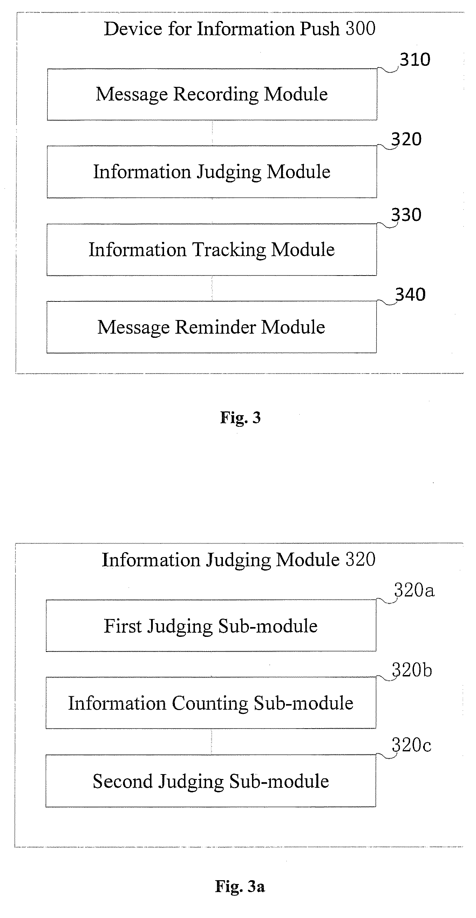

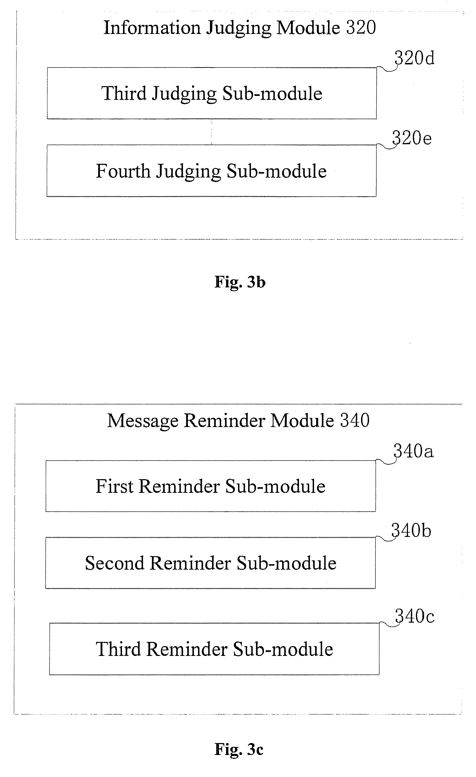

Fig. 3 is a block diagram showing a device 300 for information push, according to an exemplary embodiment. The device 300 for information push may be realized as a part of the terminal in a way of software, hardware or the combination thereof. The terminal may be the smart TV, the tablet PC, the smart phones, the computer or the like. The device 300 for information push may include: a message recoding module 310, an information judging module 320, an information tracking module 330, and a message reminder module 340.

The message recording module 310 is configured to record operations by users on video;
For example, when a user searched for a certain video on a video website, the message recording module 310 may record or store the searching operation associated with the certain video in a memory or a database. In other example, when a user played a video, the message recording module 310 may record or store the video play by the user in a memory or a video database. The message recording module 310 may record an operation along with an identification of the user and the time of the operation in a record database. One example of the record database is shown as the table below.

**[Table 1]**

| User ID | Video | Operation | Time |
|---|---|---|---|
| User A | Movie A | Searching | January 1, 2016 |
| User B | Movie B | Playing | January 2, 2016 |
| User A | Movie A | Searching | January 3, 2016 |
| User B | Movie B | Playing | January 5, 2016 |

The exemplary table includes columns of user ID, video, operation and time. The table recorded three operations: two operations by user A and one operation by user B. The table may be dynamically updated whenever any operation is made by a user.

The information judging module 320 is configured to determine whether the user is acquiring update information on the video based on the user's operation ; For example, if a user searches for the video repetitively, the information determining module 320 may determine that the user is asking update information on the video. In contrast, if the user searches for the video for the first time, the information determining module 320 may determine that the user is not asking update information on the video.
The information tracking module 330 is configured to track a video when determining that the user is acquires the update information on the video; For example, the information tracking module 330 may monitor whether a video whose update information is asked by a user is present in a video database. In other example, the information tracking module 330 may tracking a date when the video will be available in the video database.
and
The message reminder module 340 is configured to push the update information regarding the video to the user when the video is updated on the video database. For example, when a video whose update information is asked by a user becomes available in a video database, the message reminder module 340 may send a message that the video is now available in the video database and the user is able to watch the video.

Preferably, Fig. 3A is a block diagram showing an information judging module 320 according to an embodiment shown in Fig. 3. Referring to Fig. 3A, the information judging module 320 may include: a first judging sub-module 320a, an information counting sub-module 320b, and a second judging sub-module 320c.
The first judging sub-module 320a is configured to determine whether the video searched by the user exists in a video database when the operation is the user's search for the video information;
The information counting sub-module 320b is configured to count the number of use's searching activities associated with the video based on the recorded user's searching activities with the video information when the video information searched by the user does not exist in the video database; and
The second judging sub-module 320c is configured to determine whether the number of searching activities associated with the video is larger than a first preset threshold. If the number of searching activities associated with the video is larger than the first preset threshold, the information determining module 320 may determine that the user is asking for update information on the video.

Preferably, Fig. 3B is a block diagram showing an information judging module 320 according to an embodiment shown in Fig. 3. Referring to Fig. 3B, the information judging module 320 may include: a third judging sub-module 320d and a fourth judging module 320e.

The third judging sub-module 320d is configured to determine the number of viewing by a user based on the recorded user's viewing the video, For example, regarding Table 1, the third determining sub-module 320d determines that video B has been played by user B twice. In one embodiment, a video may include a series of episodes. When a user plays three different episodes of the series of episodes, the third determining sub-module 320d may determine that the video has been played three times to reflect the user's interest in the series.

The fourth judging sub-module 320e is configured to determine whether the number of viewing the video by the user is larger than a second preset threshold. If the number of playing the video by the user is larger than the second preset threshold, the information determining module 320 may determine that the user is asking for update information on the video.

Preferably, Fig. 3C is a block diagram showing a message reminder module 340 according to an embodiment shown in Fig. 3. Referring to Fig. 3C, the message reminder module 340 may include: a first reminder sub-module 340a, a second reminder sub-module 340b, and a third reminder sub-module 340c.

The first reminder sub-module 340a is configured to add a reminder to a notification bar on a terminal used by the user that the information on the video has been updated on a video website. Specifically, the first reminder sub-module 340a may add a notice to a notification bar displayed on a terminal indicating that the video is now available on the video website.
The second reminder sub-module 340b is configured to provide a pop-up window showing that the information on the video has been update. For example, the second reminder sub-module 340b may provide a pop-up window indicating that the next episode for the series sought by a user is now available. The pop-up window may be automatically displayed when the user starts application software for the video; or
The third reminder sub-module 340c is configured to push a message to a contact account set by the user when that information on the video has been updated.

In summary, the embodiments of the present disclosure provide a device for information push. The technical solution is implemented by the following steps: recording user's operation related to a video; determining whether the video is present in a video database, when the video is not present in the video database, determining whether the number of recorded user's operations related to the video is more than a threshold value, monitoring the video database until the video is added to the video database when the number of recorded user's operations related to the video is more than the threshold value; and pushing update information on the video to the user when the video is added to the video database. According to the above solution, on one hand, the video watching pattern of a user can be intelligently recognized so as to provide video update news to the user in time, while on the other hand, information is pushed according to the operation behaviors of the user so as to accurately reflect the watching preferences of the user.

For the device in the above embodiments, the detailed way of the operation of each module has been described in the embodiments of related methods, and hence will not be described in details any more.
The embodiments of the disclosure also provides a device for information push including: a processor;
a memory for storing executable instructions of the processor;
wherein the processor is configured to:
   Record, by the server, user's operations on the terminal device related to a video;
   determine whether the user is acquiring updating information of the video on the basis of the user's operations;
   rack the video when determining that the user is acquiring the updating information of the video; and
   push the updating information of the video to the terminal device when the video is updated.

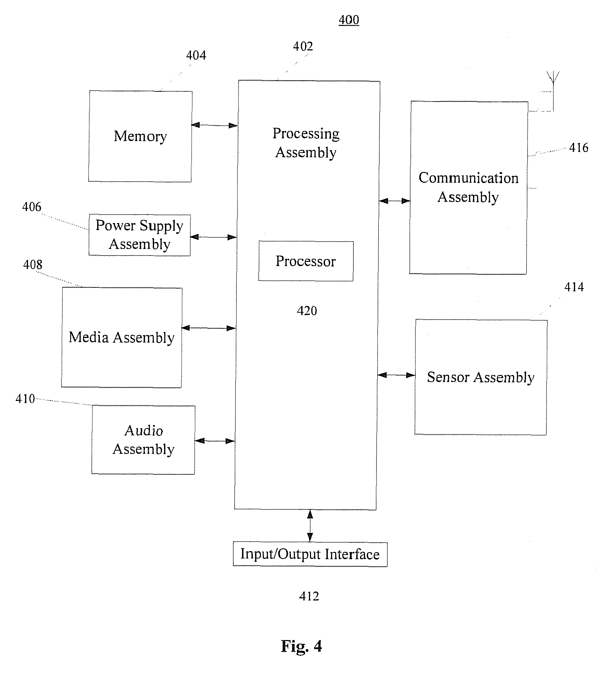

Referring to Fig. 4, Fig. 4 is a block diagram showing a device 400 for information push, according to an exemplary embodiment. For example, the device 400 may be a mobile phone, the computer, a digital broadcast terminal, a message transceiving apparatus, a game console, a tablet apparatus, a medical apparatus, a fitness apparatus, and a personal digital assistant, etc.

Referring to FIG. 4, the device 400 may include one or more of the following assemblies: a processing assembly 402, a memory 404, a power supply assembly 406, a multimedia assembly 408, an audio assembly 410, an input / output (I / O) interface 412, a sensor assembly 414, and a communications assembly 416.

The processing component 402 generally controls the whole operations of the device 400, for example, display, phone call, data communication, camera operation and record operation. The processing assembly 402 may include one or more processors 420 to implement instructions to complete all or part of steps of the above methods. In addition, the processing assembly 402 may include one or more modules to conveniently process the interaction between the processing assembly 402 and other assemblies. For example, the processing component 402 may include a multimedia module to conveniently facilitate the interaction between the media assembly 408 and the processing assembly 402.

The memory 404 is configured to store various types of data to support the operation of the device 400. The examples of these data include instructions of any application or method, contact data, address book data, a message, a picture, a video, etc., and all of them are operated on the device 400. The memory 404 may be realized in form of any type of volatile storage device, non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power supply assembly 406 provides electricity for various assemblies of the device 400. The power supply assembly 406 may include a power supply management system, one or more power supplies, and other assemblies for generating, managing and distributing electricity to the device 400.

The multimedia component 408 includes a screen providing an output interface between the device 400 and the user. In some embodiments, the screen may be a Liquid Crystal Display (LCD) or a Touch Panel (TP). If the screen includes the touch panel, the screen may be implemented as a touch screen to receive an input signal from the user. The touch panel includes one or more touch sensors to sense the gestures of touching and sliding the touch panel. The touch sensor may not only sense the border of touching or sliding gesture but also detect the duration time and pressure related to the touching or sliding operation. In some embodiments, the media assembly 408 includes one front-facing camera and/or one rear-facing camera. When the device 400 is is an operation mode, for example, a shooting mode or a video mode, the front-facing camera and/or the rear-facing camera may receive the media data from outside. Each of the front-facing camera and the rear-facing camera may be one fixed optical lens system or may have focal length or optical zoom ability.

The audio assembly 410 is configured to output and/or input audio signal. For example, the audio assembly 410 includes one microphone (MIC). When the device 400 is in the operation mode, for example, a calling mode, a record mode and a speech recognition mode, the microphone is configured to receive audio data from outside. The received audio signal may be further stored in the memory 404 or sent via the communication assembly 416. In some embodiments, the audio assembly 410 also includes one loudspeaker configured to output the audio signal.

An I/O interface 412 provides an interface between the processing assembly 402 and a peripheral interface module. The above peripheral interface module may be a keyboard, a click wheel, and button, etc. These buttons may include but not limited to a home button, a volume button, a starting button and a locking button.

The sensor assembly 414 includes one or more sensors and is configured to provide various aspects of the state assessment for the terminal 400. For example, the sensor assembly 414 may detect the on/off state of the device 400, the relative positioning of the assemblies (for example, a display and a keypad of the device 400), position change of the device 400 or one assembly of the device 400, presence or un-presence of the touch between the user and the device 400, as well as the orientation or acceleration/deceleration and temperature change of the device 400. The sensor assembly 414 may include a proximity sensor configured to detect the presence of an adjacent object when there is no physical contact. The sensor assembly 414 may also include an optical sensor (such as CMOS or a CCD image sensor) configured to be used in imaging application. In some embodiments, the sensor assembly 414 may also include an acceleration sensor, a gyro sensor, a magnetic sensor, a pressure sensor or a temperature sensor.

The communication module 416 is configured to facilitate the wired or wireless communication between the device 400 and other apparatuses. The device 400 may access the wireless network on the basis of a communication standard, such as WiFi, 2G or 3G, or the combination thereof. In one exemplary embodiment, the communication assembly 416 receives a broadcast signal or broadcast associated information from an external broadcast management system via a broadcast channel. In one exemplary embodiment, the communication assembly 416 also includes a Near Field Communication (NFC) module, to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the device 400 may be implemented by one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic components, and may be configured to implement the methods described above.

In an exemplary embodiment, a non-transitory computer-readable storage medium comprising the instructions is also provided, for example, the memory 404 including the instruction. The above instructions may be executed by the processor 420 of the device 400 to complete the above methods. For example, the non-transitory computer-readable storage medium may be a ROM, a random access memory (RAM), a CD-ROM, a magnetic tape, a floppy disk, an optical data storage devices and the like.

For a non-transitory computer-readable storage medium, when the instructions in the storage medium are executed by the processor of the device 400, the device 400 may implement a method for information push.

Those skilled in the art may think of easily other embodiments of the disclosure from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method, applied in a server, for providing video update information to a terminal device, comprising:
recording user's operations on the terminal device related to a video;
determining whether the user is acquiring updating information of the video on the basis of the user's operations;
tracking the video when determining that the user is acquiring the updating information of the video; and
pushing the updating information of the video to the terminal device when the video is updated.

2. A method according to claim 1, **characterized in that**, the user's operations comprises: user's search for the video information or the user's viewing record for the video information.

3. A method according to claim 2, **characterized in that**, said determining of whether the user is acquiring the updating information of the video on the basis of the user's operations, when the operation is the user's search behavior for the video information, comprises:
determining whether the video information searched by the user exists in a video database;
recording the number of user's searching for the video, and determining whether the number of recorded user's searching for the video is more than a first preset threshold ;
when the number of recorded user's searching for the video is more than the first preset threshold, determining that the user wants the updating information of the video.

4. A method according to claim 2, **characterized in that**, said determining of whether the user is acquiring the updating information of the video on the basis of the user's operations, when the operation is the user's viewing record for the video information, comprises:
determining whether the number of recorded user's viewing the video is more than a second preset threshold;
when the number of recorded user's viewing the video is more than the second preset threshold, determining that the user wants the updating information for the video.

5. A method according to any one of claims 1 to 4, **characterized in that**, said pushing of the updating information to the user when the video is updated comprises any one of:
adding a reminder to a notification bar on the terminal to remind the user of the updated video;
providing a pop-up window on a page of a video application noticing the updated video when the user starts the video application; and
pushing a message to an account of the user when the video is updated.

6. A device for providing video updated information from a server to a terminal device, comprises:
a message recording module configured to record user's operations on the terminal device related to a video;
an information judging module configured to determine whether the user is acquiring updating information of the video on the basis of the user's operations ;
an information tracking module configured to track the video when determining that the user acquires the updating information of the video; and
a message reminder module configured to push the updating information of the video to the terminal device when the video is updated.

7. A device according to claim 6, **characterized in that**, the information judging module comprises:
a first judging sub-module configured to determine whether the video information searched by the user exists in a video database;
an information counting sub-module configured to record the number of user's searching for the video, and determine whether the number of recorded user's searching for the video is more than a first preset threshold; and
a second judging sub-module configured to determine that the user wants the updating information of the video, when the number of recorded user's searching for the video is more than the first preset threshold.

8. A device according to claim 6 or 7, **characterized in that**, the information judging module comprises:
a third judging sub-module configured to determine whether the number of recorded user's viewing the video is more than a second preset threshold; and
a fourth judging sub-module configured to determine that the user wants the updating information for the video, when the number of recorded user's viewing the video is more than the second preset threshold.

9. A device according to any one of claims 6 to 8, **characterized in that**, the information reminder module comprises:
a first reminder sub-module configured to add a reminder to a notification bar on the terminal to remind the user of the updated video;
a second reminder sub-module configured to provide a pop-up window on a page of a video application noticing the updated video when the user starts the video application; and
a third reminder sub-module configured to push a message to an account of the user when the video is updated.

10. A computer program including instructions for executing the steps of a method for providing video update information according to any one of claims 1 to 5 when said program is executed by a computer.

11. A recording medium readable by a computer and having recorded thereon a computer program including instructions for executing the steps of a method for providing video update information according to any one of claims 1 to 5.
